# EUROPÄISCHE PATENTSCHRIFT

(11) **EP 3 334 636 B1**
(45) Veröffentlichungstag und Bekanntmachung des Hinweises auf die Patenterteilung: **11.09.2019**
(21) Anmeldenummer: 16767142.9
(22) Anmeldetag: 04.08.2016
(51) Int. Cl.: B62D 1/184

(54) **KLEMMVORRICHTUNG EINER VERSTELLBAREN LENKSÄULE FÜR KRAFTFAHRZEUGE**
CLAMPING DEVICE FOR AN ADJUSTABLE STEERING COLUMN FOR A MOTOR VEHICLE
DISPOSITIF DE SERRAGE POUR UNE COLONNE DE DIRECTION POUR UN VÉHICULE À MOTEUR

(30) Priorität: 13.08.2015 DE 102015215433
(43) Veröffentlichungstag der Anmeldung: 20.06.2018
(73) Patentinhaber: ThyssenKrupp Presta AG, 9492 Eschen (LI); thyssenkrupp AG, 45143 Essen (DE)
(72) Erfinder: SCHNITZER, Hieronymus, 9487 Gamprin (LI); PALTINISANU, Ciprian, 9492 Eschen (LI)
(74) Vertreter: thyssenkrupp Intellectual Property GmbH
(86) Internationale Anmeldenummer: PCT/EP2016/068645
(87) Internationale Veröffentlichungsnummer: WO 2017/025429

(56) Entgegenhaltungen:
- WO-A1-2009/121386
- US-A1- 2004 084 886
- US-A1- 2008 202 276

## Beschreibung

Die Erfindung betrifft eine Klemmvorrichtung einer verstellbaren Lenksäule für Kraftfahrzeuge, bei der ein mit dem Fahrzeugchassis fest verbundener Träger mit zwei die Lenksäule umfassenden Klemmbacken verbunden ist, zwischen denen ein axial und/oder vertikal verstellbares, eine Lenkspindel aufnehmendes Mantelrohr der Lenksäule festklemmbar ist, mit einem die beiden Klemmbacken verbindenden Klemmbolzen, der mit einer an mindestens einer der beiden Klemmbacken angeordneten Zuspanneinrichtung derart zusammenwirkt, dass bei einer Drehung des Klemmbolzens in Zuspannrichtung um die Bolzenachse die beiden Klemmbacken das Mantelrohr fest einklemmen und dass bei einer Drehung des Klemmbolzens entgegen der Zuspannrichtung die Klemmbacken das Mantelrohr für die Lenksäulenverstellung freigegeben, und mit einem an einem Ende des Klemmbolzens befestigten Betätigungshebel zum Drehen des Klemmbolzens, wobei der Betätigungshebel mit dem Klemmbolzen verschweißt ist.

Eine derartige Klemmvorrichtung ist beispielsweise aus der WO 2009 141 045 A1 bekannt. Die bekannte Klemmvorrichtung besitzt ein in Form einer Nockenscheibe ausgebildetes Spannteil, welches auf einem Spannbolzen angeordnet ist. Der Nocken weist auf einer Seite eine Formkontur auf. Der Betätigungshebel hat eine Vertiefung mit einer korrespondierenden Formkontur zur Nockenscheibe, wodurch eine formschlüssige Verbindung beider Bauteile ermöglicht wird.

Ein Nachteil dieser Lösung ist, dass die Baueinheit aus Hebel und Spannbolzen erheblichen Bauraum benötigt und der Hebel in seiner Drehlage gegenüber dem Spannteil von vornherein festgelegt ist und mögliche Toleranzen der Bauteile zu verändernden Dreheinstellungen in der geöffneten oder geschlossenen Position der Spannvorrichtung führen können.

Die DE 10 2010 000 504 B3 offenbart eine Klemmvorrichtung, bei der der Spannbolzen mit dem Betätigungshebel derart verbunden ist, dass der Spannbolzen und/oder ein Nockenteil eine Verzahnung aufweist, auf die der Kunststoffhebel in einem Fügebereich aufgepresst wird, so dass sich die Verzahnungsabschnitte in den Fügebereich eingraben können.

Aus der US 2004/084886 A1, die als nächstliegender Stand der Technik angesehen wird, ist eine Klemmvorrichtung bekannt, bei welcher der Klemmbolzen durch den Betätigungshebel nach außen hindurchtritt und mit diesem verschweißt sein kann. Der nach außen vorstehende Klemmbolzenkann beansprucht einen relativ großen Bauraum, der nicht weiter verringert werden kann.

Ein Nachteil dieser Lösung ist, dass es zur Verbindung des Klemmbolzens mit dem Betätigungshebel eines Verzahnungsabschnitts bedarf, welcher bei der Fertigung Bauraum und einen zusätzlichen Arbeitsschritt benötigt und Kosten verursacht. Ein weiterer Nachteil zeigt sich darin, dass der offenbarte Bolzen durch die Durchgangsbohrung des Hebels hindurchgesteckt wird und somit ein Bauteilüberstand entsteht.

Aufgabe der Erfindung ist es, eine verbesserte Verbindung zwischen Klemmbolzen und Betätigungshebel zu schaffen, die einen geringeren Bauraum benötigt. Weiter soll eine einfache Ausbildung und Montage ermöglicht werden.

Die Erfindung löst die Aufgabe dadurch, dass das mit dem Betätigungshebel zu verschweißende Ende des Klemmbolzens als tellerförmiger Bolzenkopf ausgestaltet ist, dessen gesamte Stirnfläche mit dem Betätigungshebel verschweißt ist. Mit Vorteil kann dadurch ein Bauteilüberstand vermieden werden. Zudem ist die erfindungsgemäße Maßnahme kostengünstig realisierbar. Des Weiteren gewährleistet die Schweißverbindung, dass sehr hohe Drehmomente von Betätigungshebel auf den Klemmbolzen übertragen werden können. Die Erfindung sieht vor, dass das mit dem Betätigungshebel zu verschweißende Ende des Klemmbolzens als tellerförmiger Bolzenkopf ausgestaltet ist, der mit dem Betätigungshebel verschweißt wird. Der tellerförmige Bolzenkopf hat auf seiner dem Betätigungshebel zugewandten Seite eine größere mit dem Betätigungshebel zu verschweißende Fläche als ein Klemmbolzen ohne einen derartigen Bolzenkopf hätte. Dadurch kann die Schweißstelle größere Drehmomente übertragen als ohne den verbreiteten Bolzenkopf. Die Verbindung zwischen Betätigungshebel und Klemmbolzen wird daher noch stabiler.

Die Erfindung kann noch verbessert werden durch die Maßnahme, dass der Betätigungshebel eine sacklochartige Ausnehmung zur Aufnahme des zu verschweißenden Endes des Klemmbolzens aufweist. Dies ermöglicht die Aufnahme und Zentrierung des tellerförmigen Bolzenkopfs im Material des Betätigungshebels, so dass der Betätigungshebel selbst ohne zusätzlichen Abstand zum anliegenden Klemmbacken raumsparend untergebracht werden kann.

In einer bevorzugten Ausgestaltungsform der Erfindung ist vorgesehen, dass der Klemmbolzen mit dem Betätigungshebel durch Rotationsreibschweißen verbunden ist. Diese Art des Schweißens wird bevorzugt, weil damit gleiche oder zum Teil auch unterschiedliche metallische Werkstoffe miteinander verbunden werden können. Des Weiteren ermöglicht das Reibschweißen, dass eine Stoffschlussverbindung über den gesamten anliegenden Bauteilquerschnitt erfolgt und nicht nur an dessen Peripherie. Mit dieser Art der Schweißverbindung erhält man daher eine sehr viel festere Verbindung zwischen den Bauteilen, die eine höhere Drehmomentübertragung erlaubt. Schließlich sind die Parameter des Reibschweißvorgangs wie Drehzahl, Druck, Drehmoment und Bauteilüberstand einfach zu überwachen und vorzugeben, so dass mit großer Sicherheit das gewünschte Ergebnis erzielbar und die Qualität gewährleistet ist.

Ein Ausführungsbeispiel der Erfindung wird nachfolgend anhand der Zeichnungen näher erläutert. Die Figuren zeigen im Einzelnen:
- Fig. 1:: eine verstellbare Lenksäule für Kraftfahrzeuge mit einer erfindungsgemäßen Klemmvorrichtung in perspektivischer Darstellung;

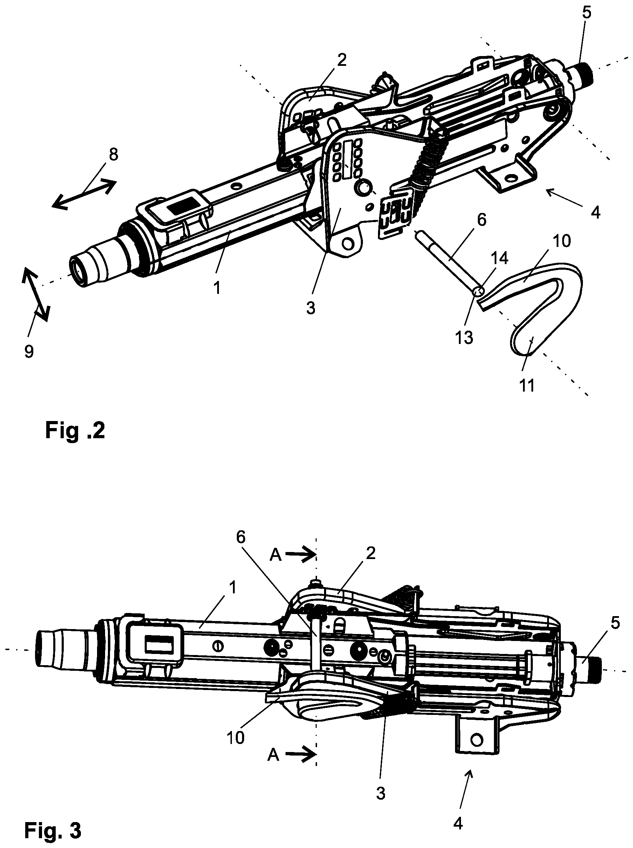

- Fig. 2:: eine verstellbare Lenksäule für Kraftfahrzeuge wie in Figur 1, mit demontiertem Klemmbolzen und Betätigungshebel;
- Fig. 3:: eine etwas andere perspektivische Darstellung der Lenksäule von Figur 2 mit montiertem Klemmbolzen und Betätigungshebel;
- Fig. 4:: eine Teilansicht eines Querschnitts gemäß Linie A-A aus Figur 3.
- Fig. 5:: eine weitere Teilansicht eines Querschnitts gemäß Linie A-A aus Figur 3.

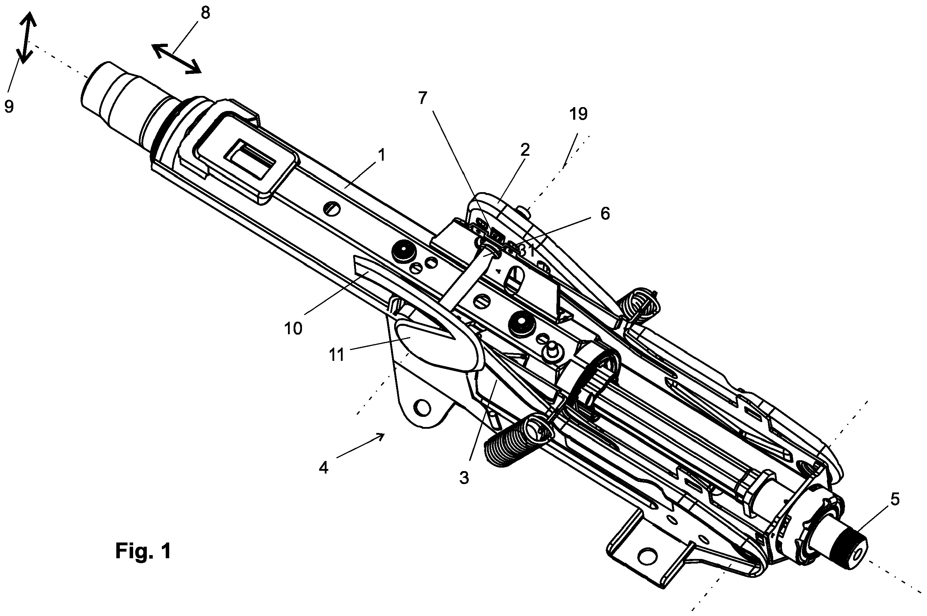

Die in Figur 1 dargestellte Lenksäule für Kraftfahrzeuge weist ein Mantelrohr 1 auf, welches zwischen zwei Klemmbacken 2, 3 festklemmbar ist. Die Klemmbacken 2, 3 sind ihrerseits an einem Träger 4 der Lenksäule befestigt, der die Lenksäule mit dem Fahrzeugchassis fest verbindet. Im Inneren des Mantelrohrs 1 ist eine Lenkspindel 5 drehbar angeordnet, die ihrerseits aus mindestens zwei ineinander teleskopisch verschiebbaren Teilen besteht. Des Weiteren sind die beiden Klemmbacken 2, 3 durch einen Klemmbolzen 6 miteinander verbunden, der mit einer Zuspanneinrichtung 7 derart zusammenwirkt, dass bei einer Drehung des Klemmbolzens 6 die beiden Klemmbacken 2, 3 aufeinander zu bewegt werden, bis sie das Mantelrohr 1 der Lenksäule fest zwischen sich einklemmen. Die Zuspanneinrichtung 7 kann im einfachsten Fall eine auf einem Außengewinde des Klemmbolzens 6 aufgeschraubte Mutter sein. Es kommen aber vorzugsweise Zuspanneinrichtungen mit Kugelrampen oder Pinmechanismen zum Einsatz.

Die Zuspanneinrichtung 7 wird somit bei einer Drehung des Klemmbolzens 6 entgegen der Zuspannrichtung in Öffnungsrichtung das Mantelrohr 1 freigegeben, so dass die Lenksäule sowohl in Axialrichtung 8 als auch in Vertikalrichtung 9 verstellbar ist. Nach dem Einstellen der verstellbaren Lenksäule in die gewünschte Position wird die Zuspanneinrichtung 7 wieder durch Drehen des Klemmbolzens 6 in Zuspannrichtung zugespannt und verriegelt, so dass sich das Mantelrohr 1 nicht mehr bewegen kann.

Zum Drehen des Klemmbolzens 6 ist ein Betätigungshebel 10 vorgesehen, dessen Ende 11 mit dem Klemmbolzen 6 fest verbunden ist.

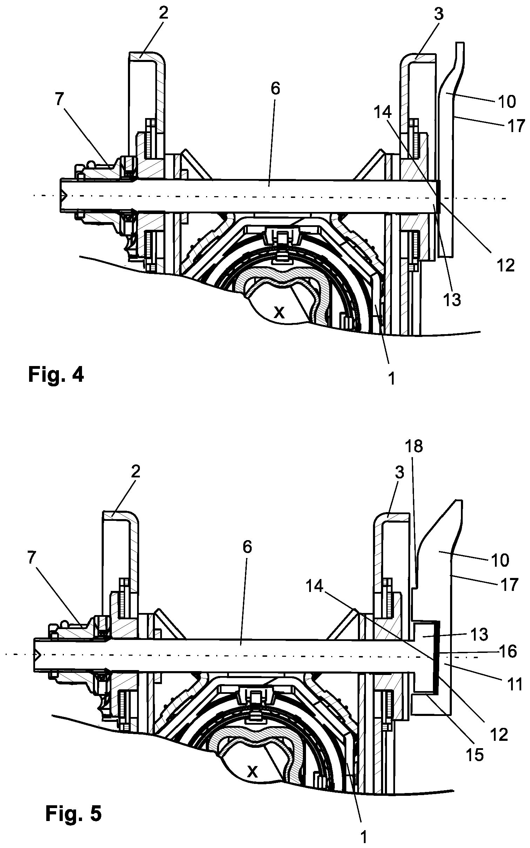

In Figur 4 ist der Betätigungshebel 10 auf seiner der Lenksäule 1 zugewandten Seite 18 plan ausgebildet. Am zu verschweißenden Ende 13 wird die Stirnfläche 14 des Klemmbolzens 6 mit dem Betätigungshebel 10 durch Rotationsreibschweißen verbunden, wobei die gesamte Stirnfläche 14 des Bolzenkopfs 13 auf einer der Lenksäule 1 zugewandten Seite 18 des Betätigungshebels 10 vollflächig verschweißt wird.

Eine alternative Ausführung gemäß der Erfindung, wie man am besten in Figur 5 erkennt, ist der Betätigungshebel 10 an der Verschweissungsstelle 12 mit dem Klemmbolzen 6 verschweißt. Der Klemmbolzen 6 ist hierfür an seinem zu verschweißenden Ende 13 mit einem Bolzenkopf 13 versehen, dessen gesamte Stirnfläche 14 mit dem Betätigungshebel 10 verschweißt ist. Der tellerförmige Bolzenkopf 13 wird bei der Fertigung des Klemmbolzens 6 einstückig ausgeformt. Das Ende 11 des Betätigungshebels 10 ist mit einer sacklochartigen Ausnehmung 15 versehen, die den tellerförmigen Bolzenkopf 13 aufnimmt. Der tellerförmige Bolzenkopf 13 des Klemmbolzens 6 wird mit dem Betätigungshebel 10 durch Rotationsreibschweißen verbunden, wobei die gesamte Stirnfläche 14 des Bolzenkopfs 13 mit der gesamten Grundfläche 16 der Ausnehmung 15 vollflächig verschweißt wird. Alternativ kann der Klemmbolzen 6 an seinem zu verschweissenden Ende 13 mit der gesamten Stirnfläche 14 in einer Ausnehmung 15 des Betätigungshebels 10 verschweisst sein.

Durch die erfindungsgemäße Verschweißung des Bolzenkopfs 13 mit dem Betätigungshebel 10 ergibt sich eine extrem feste und belastbare Verbindung der beiden Bauteile, so dass mit dem Betätigungshebel 10 sehr hohe Drehmomente auf dem Klemmbolzen 6 übertragen werden können, ohne dass sich die Schweißverbindung lösen würde. Weitere Vorteile der Erfindung bestehen darin, dass auf der der Lenksäule abgewandten Seite 17 des Betätigungshebels 10 keinerlei Materialüberstände verbleiben und dass der Betätigungshebel 6 mit seiner der Lenksäule zugewandten Seite 18 ohne wesentlichen Abstand zur Lenksäule und somit raumsparend angeordnet ist. Schließlich sind die Parameter des Reibschweißverfahrens auch bei automatischer Fertigung der Lenksäule sicher beherrschbar, so dass eine hohe Qualität bei geringen Fertigungskosten gewährleistet ist.

### BEZUGSZEICHENLISTE

- 1: Mantelrohr
- 2: Klemmbacken
- 3: Klemmbacken
- 4: Träger
- 5: Lenkspindel
- 6: Klemmbolzen
- 7: Zuspanneinrichtung
- 8: Axialrichtung
- 9: Vertikalrichtung
- 10: Betätigungshebel
- 11: Ende
- 12: Verschweißungsstelle
- 13: Bolzenkopf / Ende
- 14: Stirnfläche
- 15: Ausnehmung
- 16: Grundfläche
- 17: Seite
- 18: Seite
- 19: Bolzenachse

## Patentansprüche

1. Klemmvorrichtung einer verstellbaren Lenksäule für Kraftfahrzeuge, bei der ein mit dem Fahrzeugchassis fest verbundener Träger (4) mit zwei die Lenksäule umfassenden Klemmbacken (2, 3) verbunden ist, zwischen denen ein axial und/oder vertikal verstellbares, eine Lenkspindel (5) aufnehmendes Mantelrohr (1) der Lenksäule festklemmbar ist, mit einem die beiden Klemmbacken (2, 3) verbindenden Klemmbolzen (6), der mit einer an mindestens einer der beiden Klemmbacken (2, 3) angeordneten Zuspanneinrichtung (7) derart zusammenwirkt, dass bei einer Drehung des Klemmbolzens (6) in Zuspannrichtung um die Bolzenachse (19) die beiden Klemmbacken (2, 3) das Mantelrohr (1) fest einklemmen und dass bei einer Drehung des Klemmbolzens (6) entgegen der Zuspannrichtung die Klemmbacken (2, 3) das Mantelrohr (1) für die Lenksäulenverstellung freigegeben, und mit einem an einem Ende (13) des Klemmbolzens (6) befestigten Betätigungshebel (10) zum Drehen des Klemmbolzens (6), wobei der Betätigungshebel (10) mit dem Klemmbolzen (6) verschweißt ist, **dadurch gekennzeichnet, dass** das mit dem Betätigungshebel (6) zu verschweißende Ende (13) des Klemmbolzens (6) als tellerförmiger Bolzenkopf (13) ausgestaltet ist, dessen gesamte Stirnfläche (14) mit dem Betätigungshebel (10) verschweißt ist.

2. Klemmvorrichtung nach Anspruch 1, **dadurch gekennzeichnet, dass** der Betätigungshebel (10) eine sacklochartige Ausnehmung (15) zur Aufnahme des zu verschweißenden Endes (13) des Klemmbolzens (6) aufweist.

3. Klemmvorrichtung nach einem der vorhergehenden Ansprüche, **dadurch gekennzeichnet, dass** der Klemmbolzen (6) mit dem Betätigungshebel (10) durch Rotationsreibschweißen verbunden ist.

## Claims

1. Clamping device of an adjustable steering column for motor vehicles, in which clamping device a carrier (4) which is connected fixedly to the vehicle chassis is connected to two clamping jaws (2, 3) which encompass the steering column and between which an axially and/or vertically adjustable casing tube (1) of the steering column can be clamped fixedly, which casing tube (1) receives a steering spindle (5), having a clamping bolt (6) which connects the two clamping jaws (2, 3) and interacts with a fastening device (7) which is arranged on at least one of the two clamping jaws (2, 3), in such a way that, in the case of a rotation of the clamping bolt (6) in the fastening direction about the bolt axis (19), the two clamping jaws (2, 3) clamp in the casing tube (1) fixedly, and that, in the case of a rotation of the clamping bolt (6) counter to the fastening direction, the clamping jaws (2, 3) release the casing tube (1) for the steering column adjustment, and having an actuating lever (10) which is fastened to one end (13) of the clamping bolt (6) for rotating the clamping bolt (6), the actuating lever (10) being welded to the clamping bolt (6), **characterized in that** that end (13) of the clamping bolt (6) which is to be welded to the actuating lever (6) is configured as a plate-shaped bolt head (13), the entire end face (14) of which bolt head (13) is welded to the actuating lever (10).

2. Clamping device according to Claim 1, **characterized in that** the actuating lever (10) has a blind bore-like recess (15) for receiving that end (13) of the clamping bolt (6) which is to be welded.

3. Clamping device according to one of the preceding claims, **characterized in that** the clamping bolt (6) is connected to the actuating lever (10) by way of rotary friction welding.

## Revendications

1. Dispositif de blocage d'une colonne de direction réglable pour véhicules automobiles, dans lequel un support (4) connecté fixement au châssis du véhicule est raccordé à deux mâchoires de blocage (2, 3) comprenant la colonne de direction, entre lesquelles un tube d'enveloppe (1), réglable axialement et/ou verticalement et recevant une broche de direction (5), de la colonne de direction peut être bloqué, comportant un boulon de blocage (6) connectant les deux mâchoires de blocage (2, 3), lequel interagit avec un dispositif de serrage (7) disposé au niveau d'au moins une des deux mâchoires de blocage (2, 3) de manière à ce que, en cas de rotation du boulon de blocage (6) dans le sens de serrage autour de l'axe du boulon (19), les deux mâchoires de blocage (2, 3) enserrent fixement le tube d'enveloppe (1), et qu'en cas de rotation du boulon de blocage (6) dans le sens inverse du sens de serrage, les mâchoires de blocage (2, 3) libèrent le tube d'enveloppe (1) pour le réglage de la colonne de direction, et comportant un levier d'actionnement (10) fixé à une extrémité (13) du boulon de blocage (6) pour faire tourner le boulon de blocage (6), le levier d'actionnement (10) étant soudé au boulon de blocage (6), **caractérisé en ce que** l'extrémité (13), à souder au levier d'actionnement (6), du boulon de blocage (6) est réalisée sous forme d'une tête de boulon (13) en forme de plateau dont toute la surface avant (14) est soudée au levier d'actionnement (10).

2. Dispositif de blocage selon la revendication 1, **caractérisé en ce que** le levier d'actionnement (10) présente une échancrure de type trou borgne (15) destinée à recevoir l'extrémité à souder (13) du boulon de blocage (6).

3. Dispositif de blocage selon une des revendications précédentes, **caractérisé en ce que** le boulon de blocage (6) est raccordé au levier d'actionnement (10) par un soudage à friction par rotation.
